# EUROPÄISCHE PATENTSCHRIFT

(11) **EP 1 542 171 B1**
(45) Veröffentlichungstag und Bekanntmachung des Hinweises auf die Patenterteilung: **21.03.2007**
(21) Anmeldenummer: 03028241.2
(22) Anmeldetag: 09.12.2003
(51) Int. Cl.: G07C 9/00, B60R 25/00

(54) **Zugangskontrolleinrichtung, insbesondere für ein Fahrzeug, mit drahtloser Kommunikation zwischen einer zugangsseitigen Steuereinheit und einer tragbaren Indentifikationseinrichtung**
Access control installation, especially for vehicles, using wireless communication between an accessed side control unit and a portable identification device
Installation d'accès, particulièrement pour véhicule automobile, avec communication sans file entre une unité de commande et une unité d'intification portable

(43) Veröffentlichungstag der Anmeldung: 15.06.2005
(73) Patentinhaber: Delphi Technologies, Inc., Troy, MI 48007 (US)
(72) Erfinder: Suck, Jochen, 51674 Wiehl (DE)
(74) Vertreter: Manitz, Finsterwald & Partner GbR

(56) Entgegenhaltungen:
- EP-A- 0 440 974
- WO-A-98/34818
- DE-A- 3 900 494
- DE-A- 4 226 053
- DE-A- 19 901 364

## Beschreibung

Die Erfindung betrifft eine Zugangskontrolleinrichtung der im Oberbegriff des Anspruchs 1 angegebenen Art. Eine solche Zugangskontrolleinrichtung ist beispielsweise in der DE 199 01 364 A1 beschrieben.

Eine solche Zugangskontrolleinrichtung kann insbesondere in Verbindung mit einem schlüssellosen Zugangssystem (keyless entry) und/oder einem schlüssellosen Startsystem (keyless start system) vorzugsweise für Fahrzeuge vorgesehen sein. Grundsätzlich ist jedoch beispielsweise auch ein Einsatz für Gebäude, Türen und/oder dergleichen denkbar.

Die Identifikationseinrichtung kann beispielsweise in einem Fahrzeugschlüssel, einer Chipkarte oder dergleichen integriert sein.

Die zugangsseitige Steuereinrichtung sowie die Identifikationseinrichtung einer betreffenden Zugangskontrolleinrichtung kann jeweils einen NF-Schaltkreis, eine vorzugsweise einen Mikroprozessor oder -computer aufweisende Logikeinheit und einen HF-Schaltkreis (Sender/Empfänger oder Transceiver) umfassen.

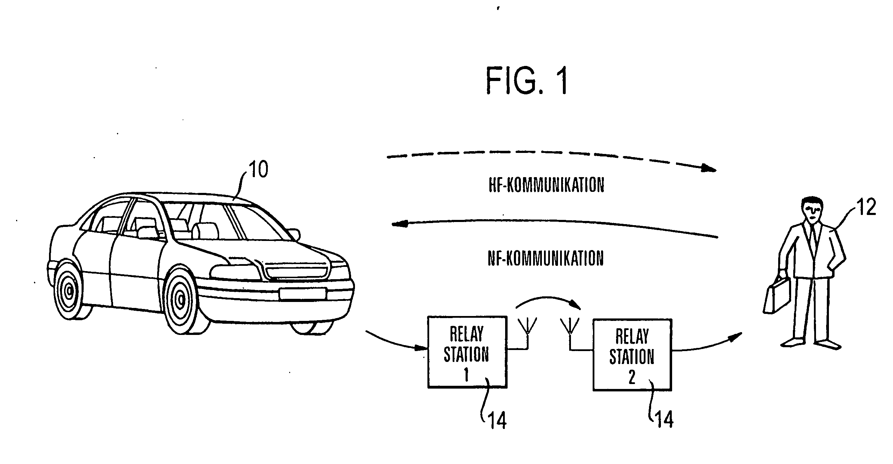

Ein bei bisher bekannten Zugangskontrolleinrichtungen auftretendes Problem besteht darin, dass es für einen potentiellen Dieb sehr leicht möglich ist, die NF-Kommunikationsstrecke zwischen einem jeweiligen Fahrzeug 10 und der beispielsweise die Funktion eines Schlüssels erfüllenden Identifikationseinrichtung 12 beispielsweise durch eine oder mehrere Relay-Stationen 14 zu erweitern (vgl. Figur 1).

Eine Erweiterung der bi- und/oder unidirektionalen HF-Kommunikationsstrecke wäre wesentlich schwieriger. Angesichts der bisher üblichen Weitbereichs-Betriebsart (maximale Reichweite 30 bis 40 m) für das Fernbedienungssystem (remote keyless entry) ist nun aber eine Erweiterung der HF-Kommunikationsstrecke (vgl. Figur 1) für einen Diebstahl (Öffnen und Starten des Fahrzeugs) mit einem Relay-Stationssystem nicht erforderlich.

Bei der aus der DE 199 01 364 A 1 bekannten Zugangskontrolleinrichtung sind Größe und Form des Bereichs, in dem die Betriebssignale übertragbar sind, durch die Ausgestaltung der Antennen in dem auf der Zugangsseite vorgesehenen Sensor bestimmt.

Der Erfindung liegt die Aufgabe zugrunde, eine verbesserte Zugangskontrolleinrichtung der eingangs genannten Art zu schaffen, mit der eine höhere Sicherheit gewährleistet ist.

Diese Aufgabe wird erfindungsgemäß durch die Vennezeichnendem Merkmale des Anspruchs 1 gelöst. Die HF-Reichweite der Nahbereichs-Betriebsart ist also im Vergleich zur HF-Reichweite der Weitbereichs-Betriebsart kleiner.

Aufgrund dieser Ausbildung ergibt sich unter Aufrechterhaltung eines zuverlässigen Betriebs eine deutlich höhere Sicherheit. Außer für Fahrzeuge, insbesondere Kraftfahrzeuge, kann die erfindungsgemäße Zugangskontrolleinrichtung insbesondere auch für Gebäude, Türen und/oder dergleichen eingesetzt werden.

In den unterschiedlichen Betriebsarten kann die HF-Kommunikation insbesondere auch mit unterschiedlicher Datenmodulation erfolgen. Dabei kann für diese HF-Kommunikation beispielsweise jeweils eine Amplituden-, Frequenz- oder Phasenmodulation (AM/FM/PM) vorgesehen sein.

In der Weitbereichs-Betriebsart kann die maximale Entfernung der Identifikationseinrichtung von der Steuereinrichtung, bei der die HF-Kommunikation noch möglich ist, beispielsweise in einem Bereich von etwa 30 bis etwa 40 m liegen. Demgegenüber liegt diese maximale Entfernung in der Nahbereichs-Betriebsart beispielsweise in einem Bereich von etwa 2 bis etwa 4 m.

Der Weitbereichs-Betriebsart kann beispielsweise zumindest eine Fernbedienungsfunktion (remote keyless entry function) zugeordnet sein. Dabei ist für diese Fernbedienungsfunktion die HF-Kommunikation, insbesondere die der Identifikation dienende HF-Kommunikation, bevorzugt über die Identifikationseinrichtung auslösbar. So kann die HF-Kommunikation beispielsweise über wenigstens eine der Identifikationseinrichtung zugeordnete Taste oder dergleichen auslösbar sein.

Mit der über die Identifikationseinrichtung erfolgenden Auslösung ist dann vorzugsweise die Weitbereichs-Betriebsart aktivierbar.

Der Nahbereichs-Betriebsart kann zumindest eine schlüssellose Funktion (keyless function) zugeordnet sein.

Eine bevorzugte praktische Ausführungsform der erfindungsgemäßen Zugangskontrolleinrichtung zeichnet sich dadurch aus, dass für die schlüssellose Funktion die der Identifikation dienende Kommunikation über zugangsseitige Mittel, die durch den sich im Nahbereich befindenden Benutzer betätigbar sind, und/oder über zugangsseitige Mittel auslösbar ist, über die die Anwesenheit des Benutzers und/oder der Identifikationseinrichtung im Nachbereich erfassbar ist, so dass eine Auslösung nur bei sich im Nachbereich befindendem Benutzer bzw. Identifikationseinrichtung möglich ist.

Im Fall eines Fahrzeuges ist eine entsprechende Auslösung der der Identifikation dienenden Kommunikation vorzugsweise nur möglich, wenn der Benutzer bzw. die Identifikationseinrichtung nicht weiter als etwa 1 bis etwa 3 m vom Fahrzeugmittelpunkt entfernt ist.

Die der Identifikation dienende Kommunikation kann beispielsweise über einen Türgriff, einen Schalter, einen Näherungssensor und/oder dergleichen auslösbar sein.

Mit der über die betreffenden Mittel erfolgenden Auslösung der der Identifikation dienenden Kommunikation ist dann vorzugsweise die Nahbereichs-Betriebsart aktivierbar.

Bei einer zweckmäßigen praktischen Ausführungsform erfolgt in der Weitbereichs-Betriebsart zumindest zeitweise eine bidirektionale HF-Kommunikation zwischen der Steuereinrichtung und der Identifikationseinrichtung.

Wie bereits erwähnt, können die Steuereinrichtung und/oder die Identifikationseinrichtung jeweils einen NF-Schaltkreis, HF-Schaltkreis und eine vorzugsweise einen Mikroprozessor oder Mikrocomputer aufweisende Logikeinheit umfassen.

Zur Aktivierung der Nahbereichs-Betriebsart können die Steuereinrichtung und die Identifikationseinrichtung jeweils mit einem Schaltsignal beaufschlagbar sein.

Dabei wird das für die Steuereinrichtung bestimmte, der Aktivierung der Nahbereichs-Betriebsart dienende Schaltsignal vorzugsweise mit der Auslösung der der Identifikation dienenden Kommunikation erzeugt.

Zweckmäßigerweise wird das für die Steuereinrichtung bestimmte, der Aktivierung der Nahbereichs-Betriebsart dienende Schaltsignal über einen Türgriff, einen Schalter, einen Näherungssensor und/oder dergleichen erzeugt.

Von Vorteil ist insbesondere auch, wenn das für die Identifikationseinrichtung bestimmte, der Aktivierung der Nahbereichs-Betriebsart dienende Schaltsignal über eine der Identifikationseinrichtung zugeordnete NF-Empfangseinheit erzeugt wird, durch die die Logikeinheit bzw. der Mikroprozessor und der HF-Schaltkreis der Identifikationseinrichtung für die schlüssellose Kommunikation aktiviert werden.

In der Weitbereichs-Betriebsart kann zumindest zeitweise auch eine unidirektionale HF-Kommunikation von der Identifikationseinrichtung zur Steuereinrichtung erfolgen.

Bei einem jeweiligen Umschalten von der Weitbereichs-Betriebsart in die Nahbereichs-Betriebsart durch entsprechendes Umschalten des Leistungspegels kann die der Steuereinrichtung zugeordnete HF-Empfangseinheit ihren Weitbereichs-Betriebsmodus zweckmäßigerweise beibehalten.

Dagegen wird für ein Umschalten zwischen den verschiedenen Betriebsarten durch entsprechendes Umschalten zwischen verschiedenen Datenmodulationsarten das für die Identifikationseinrichtung bestimmte, der Aktivierung der Nahbereichs-Betriebsart dienende Schaltsignal bevorzugt über eine der Identifikationseinrichtung zugeordnete NF-Empfangseinheit erzeugt, durch die die Logikeinheit bzw. der Mikroprozessor und der HF-Schaltkreis der Identifikationseinrichtung für die schlüssellose Kommunikation aktiviert werden.

Die Erfindung wird im folgenden anhand von Ausführungsbeispielen unter Bezugnahme auf die Zeichnung näher erläutert; in dieser zeigen:
- Figur 1: eine schematische vereinfachte Darstellung der Funktionsweise einer herkömmlichen Zugangskontrolleinrichtung,
- Figur 2: eine schematische vereinfachte Darstellung des Grundaufbaus einer beispielhaften Ausführungsform einer erfindungsgemäßen Zugangskontrolleinrichtung,
- Figur 3: eine schematische vereinfachte Darstellung der Funktionsweise der erfindungsgemäßen Zugangskontrolleinrichtung in der Weitbereichs-Betriebsart und
- Figur 4: eine schematische vereinfachte Darstellung der Funktionsweise der erfindungsgemäßen Zugangskontrolleinrichtung in der Nahbereichs-Betriebsart.

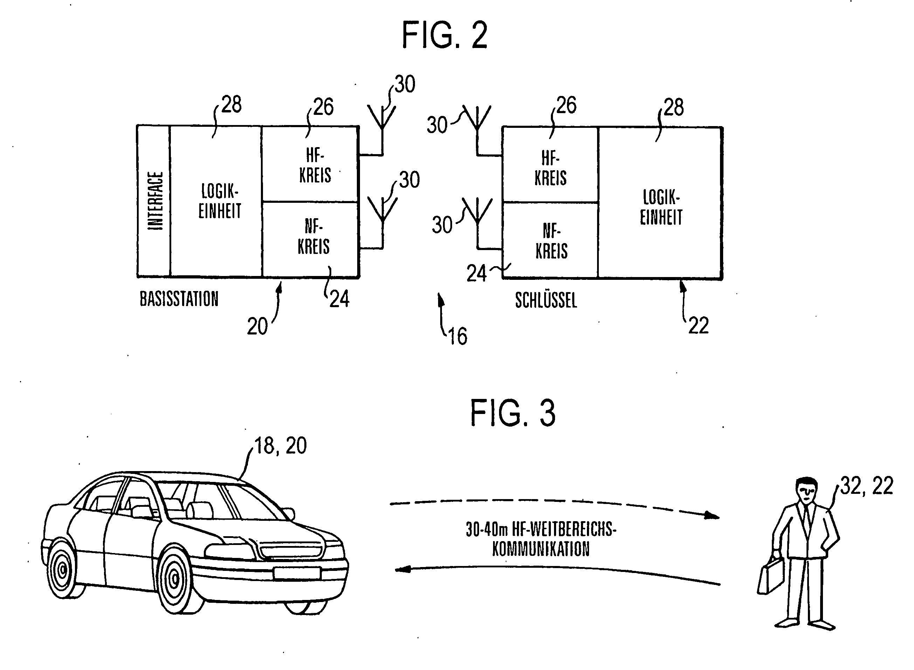

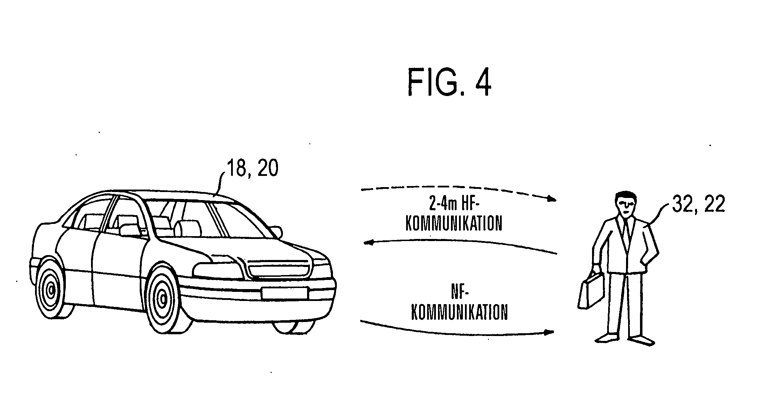

Figur 2 zeigt in schematischer vereinfachter Darstellung den Grundaufbau einer beispielhaften Ausführungsform einer erfindungsgemäßen Zugangskontrolleinrichtung 16, die im vorliegenden Fall für ein Fahrzeug 18, insbesondere Kraftfahrzeug (vgl. auch die Figuren 3 und 4) vorgesehen ist.

Wie anhand der Figur 2 zu erkennen ist, umfasst die Zugangskontrolleinrichtung 16 eine zugangsseitige, d.h. hier dem Fahrzeug 18 (vgl. auch die Figuren 3 und 4) zugeordnete Steuereinrichtung 20 und eine benutzerseitige tragbare Identifikationseinrichtung 22. Dabei weist sowohl die Steuereinrichtung 20 als auch die Identifikationseinrichtung 22 jeweils einen NF-Schaltkreis 24, einen HF-Schaltkreis 26 und eine Logikeinheit 28 auf, die insbesondere mit wenigstens einem Mikroprozessor oder -computer versehen sein kann. Wie anhand der Figur 2 zu erkennen ist, sind den NF-Schaltkreisen 24 und HF-Schaltkreisen 26 jeweils Antennen 30 zugeordnet. Die Steuereinrichtung 20 kann überdies ein Interface umfassen.

Die Zugangskontrolleinrichtung 16 kann also insbesondere der Steuereinrichtung 20 sowie der Identifikationseinrichtung 22 zugeordnete Sende-, Empfangs- und/oder Transceiver-Einheiten für eine drahtlose NF- und HF-Kommunikation zwischen der Steuereinrichtung 20 und der Identifikationseinrichtung 22 umfassen.

Ein Schutz gegenüber der eingangs anhand der Figur 1 beschriebenen Situation einer möglichen Erweiterung der Kommunikationsstrecke durch eine oder mehrere Relay-Stationen besteht nun darin, zwei unterschiedliche HF-Leistungspegel oder Datenmodulationsarten (AM/FM oder AM/PM oder FM/PM) vorzusehen. Dabei ist insbesondere ein HF- Weitbereichs-Betrieb für die Fernbedienungsfunktion (remote keyless entry) gemäß Figur 3 und eine HF-Nahbereichs-Betriebsart für eine schlüssellose Zugangs- und Startfunktion (vgl. Figur 4) denkbar. In der in der Figur 3 dargestellten Weitereichs-Betriebsart kann der Benutzer 32 beispielsweise durch Drücken einer der Identifikationseinrichtung 22 zugeordneten Taste oder dergleichen eine weitere Kommunikation auslösen.

In der in der Figur 4 dargestellten Nahbereichs-Betriebsart kann der Benutzer 32 der Identifikationseinrichtung 22 das schlüssellose System jeweils dadurch auslösen, dass er im Nahbereich des Fahrzeugs 18 beispielsweise einen Türgriff des Fahrzeugs 18 oder einen Schalter betätigt, in eine bestimmte Nahzone eintritt und/ oder dergleichen.

Für eine schlüssellose Zugangs- und Startfunktion wird eine HF-Kommunikation in einer Weitbereichs-Betriebsart bei hohem Signalpegel also nicht benötigt, da der Benutzer 32 des Fahrzeugs sich in unmittelbarer Fahrzeugnähe aufhalten muss. Er muss einen Auslöser oder Schalter am Fahrzeug betätigen, um die Kommunikation zwischen dem Fahrzeug 18 und seiner Identifikationseinrichtung 22 zu starten. Lässt die HF-Nahbereichs-Betriebsart beispielsweise nur eine Entfernung zwischen dem Fahrzeug 18 und der als Schlüssel dienenden Identifikationseinrichtung 22 in einem Bereich von beispielsweise 2 bis 4 m zu, so muss ein potentieller Dieb sowohl die HF- als auch die NF-Kommunikationsstrecke für einen jeweiligen Diebstahlversuch erweitern. Die Schaffung einer einen Diebstahl ermöglichenden Situation bei einem HF-Transceiver-System wird damit beträchtlich erschwert.

Es können nunmehr in Abhängigkeit von der Art und/oder dem Ort der Auslösung einer jeweiligen der Identifikation dienenden Kommunikation zwischen der Steuereinrichtung 20 und der Identifikationseinrichtung 22 für die HF-Kommunikation unterschiedliche Betriebsarten aktiviert werden. Davon kann eine eine Weitbereichs-Betriebsart (vgl. Figur 3) und eine andere eine Nahbereichs-Betriebsart (vgl. Figur 4) sein. In der Weitbereichs-Betriebsart ist die HF-Kommunikation auch noch bei relativ weit von der Steuereinrichtung 20 entfernter Identifikationseinrichtung 22 möglich. Dagegen ist in der Nahbereichs-Betriebsart die HF-Kommunikation nur bei relativ nahe an der Steuereinrichtung 20 befindlicher Identifikationseinrichtung 22 möglich.

Die HF-Kommunikation erfolgt in den unterschiedlichen Betriebsarten mit unterschiedlichem Leistungspegel und kann auch mit unterschiedlicher Datenmodulation erfolgen. Dabei ist für die HF-Kommunikation jeweils eine Amplituden-, Frequenz- oder Phasenmodulation (AM, FM, PM) denkbar. Falls in den unterschiedlichen Betriebsarten unterschiedliche Datenmodulationsarten eingesetzt werden, sind also beispielsweise die folgenden Kombinationen denkbar: AM/FM oder AM/PM oder FM/PM.

Wie anhand der Figur 3 zu erkennen ist, kann in der Weitbereichs-Betriebsart die maximale Entfernung der Identifikationseinrichtung 22 von der Steuereinrichtung 20, bei der die HF-Kommunikation noch möglich ist, beispielsweise in einem Bereich von etwa 30 bis etwa 40 m liegen.

Dagegen kann gemäß Figur 4 in der Nahbereichs-Betriebsart die maximale Entfernung der Identifikationseinrichtung 22 von der Steuereinrichtung 20, bei der die HF-Kommunikation noch möglich ist, beispielsweise in einem Bereich von etwa 2 bis etwa 4 m liegen.

Vorteilhafterweise ist der Weitbereichs-Betriebsart zumindest eine Fernbedienungsfunktion (remote keyless entry function) zugeordnet. Für eine solche Fernbedienungsfunktion kann die HF-Kommunikation und insbesondere die der Identifikation dienende HF-Kommunikation insbesondere über die Identifikationseinrichtung 22 ausgelöst werden. So ist beispielsweise eine Auslösung der HF-Kommunikation über wenigstens eine der Identifikationseinrichtung 22 zugeordnete Taste oder dergleichen denkbar. Mit der über die Identifikationseinrichtung 22 erfolgenden Auslösung ist dann vorzugsweise die Weitbereichs-Betriebsart aktivierbar.

Der Nahbereichs-Betriebsart kann zumindest eine schlüssellose Funktion (keyless function) zugeordnet sein.

Von Vorteil ist hierbei insbesondere, wenn für die schlüssellose Funktion die der Identifikation dienende Kommunikation über zugangsseitige bzw. im Bereich des Fahrzeugs 18 vorgesehene Mittel, die durch den sich im Nahbereich befindenden Benutzer 32 betätigbar sind, und/oder über zugangseitige Mittel auslösbar ist, über die die Anwesenheit des Benutzers 32 und/oder der Identifikationseinrichtung 22 im Nahbereich erfassbar ist, so dass eine Auslösung nur bei sich im Nahbereich befindendem Benutzer 32 bzw. Identifikationseinrichtung 22 möglich ist.

Bevorzugt ist eine entsprechende Auslösung der der Identifikation dienenden Kommunikation nur möglich, wenn der Benutzer 32 bzw. die Identifikationseinrichtung 22 nicht weiter als etwa 1 bis etwa 3 m vom Fahrzeugmittelpunkt entfernt ist. Dabei kann die der Identifikation dienende Kommunikation beispielsweise über einen Türgriff, einen Schalter, einen Näherungssensor und/oder dergleichen auslösbar sein.

Mit der über die betreffenden Mittel erfolgende Auslösung der der Identifikation dienenden Kommunikation ist dann vorteilhafterweise die Nahbereichs-Betriebsart aktivierbar.

Beispielsweise in der Weitbereichs-Betriebsart kann zumindest zeitweise beispielsweise auf der Basis von HF-Transceivern in der Steuereinrichtung 20 und der Identifikationseinrichtung 22 eine bidirektionale HF-Kommunikation zwischen der Steuereinrichtung 20 und der Identifikationseinrichtung 22 erfolgen.

Zur Aktivierung der Nahbereichs-Betriebsart sind die Steuereinrichtung 20 und die Identifikationseinrichtung 22 jeweils mit einem Schaltsignal beaufschlagbar.

Dabei kann das für die Steuereinrichtung 20 bestimmte, der Aktivierung der Nahbereichs-Betriebsart dienende Schaltsignal beispielsweise mit der Auslösung der der Identifikation dienenden Kommunikation erzeugt werden.

Das für die Steuereinrichtung 20 bestimmte, der Aktivierung der Nahbereichs-Betriebsart dienende Schaltsignal kann beispielsweise über einen Türgriff, einen Schalter, einen Näherungssensor und/oder dergleichen erzeugt werden.

Das für die Identifikationseinrichtung 22 bestimmte, der Aktivierung der Nahbereichs-Betriebsart dienende Schaltsignal kann beispielsweise über eine der Identifikationseinrichtung 22 zugeordnete NF-Empfangseinheit erzeugt werden, durch die die Logikeinheit 28 bzw. der Mikroprozessor und der HF-Schaltkreis 26 der Identifikationseinrichtung 22 für die schüssellose Kommunikation aktiviert werden.

In der Weitbereichs-Betriebsart kann auf der Basis eines HF-Senders der Identifikationseinrichtung 22 und eines HF-Empfängers der Steuereinrichtung 20 zumindest zeitweise auch eine unidirektionale HF-Kommunikation von der Identifikationseinrichtung 22 zur Steuereinrichtung 20 erfolgen.

Bei einem jeweiligen Umschalten von der Weitbereichs-Betriebsart in die Nahbereichs-Betriebsart durch entsprechendes Umschalten des Leistungspegels kann die der Steuereinrichtung zugeordnete HF-Empfangseinheit ihren Weitbereichs-Betriebsmodus beibehalten.

Für ein Umschalten zwischen den verschiedenen Betriebsarten durch entsprechendes Umschalten zwischen verschiedenen Datenmodulationsarten kann das für die Identifikationseinrichtung 22 bestimmte, der Aktivierung der Nahbereichs-Betriebsart dienende Schaltsignal über eine der Identifikationseinrichtung 22 zugeordnete NF-Empfangseinheit erzeugt werden, durch die die Logikeinheit 28 bzw. der Mikroprozessor und der HF-Schaltkreis 26 der Identifikationseinrichtung 22 für die schlüssellose Kommunikation aktiviert werden.

### Bezugszeichenliste

- 10: Fahrzeug
- 12: Identifikationseinrichtung
- 14: Relay-Station
- 16: Zugangskontrolleinrichtung
- 18: Fahrzeug
- 20: Steuereinrichtung
- 22: Identifikationseinrichtung
- 24: NF-Schaltkreis
- 26: HF-Schaltkreis
- 28: Logikeinheit
- 30: Antenne
- 32: Benutzer

## Patentansprüche

1. Zugangskontrolleinrichtung (16) insbesondere für Fahrzeuge (18), mit einer zugangsseitigen Steuereinrichtung (20), einer benutzerseitigen tragbaren Identifikationseinrichtung (22) und der Steuereinrichtung (20) sowie der Identifikationseinrichtung (22) zugeordneten Sende-, Empfangs- und/oder Transceiver-Einheiten für eine drahtlose NF- und HF-Kommunikation zwischen der Steuereinrichtung (20) und der Identifikationseinrichtung (22), wobei in Abhängigkeit von der Art der Auslösung einer jeweiligen der Identifikation dienenden Kommunikation zwischen der Steuereinrichtung (20) und der Identifikationseinrichtung (22) für die HF-Kommunikation unterschiedliche Betriebsarten aktivierbar sind, von denen eine eine Weitbereichs-Betriebsart, in der die HF-Kommunikation auch noch bei relativ weit von der Steuereinrichtung (20) entfernter Identifikationseinrichtung (22) möglich ist, und eine andere eine Nahbereichs-Betriebsart darstellt, in der die HF-Kommunikation nur bei relativ nahe an der Steuereinrichtung (20) befindlicher Identifikationseinrichtung (22) möglich ist, wobei der Weitbereichs-Betriebsart und der Nahbereichs-Betriebsart zumindest teilweise unterschiedliche Funktionen zugeordnet sind,
**dadurch gekennzeichnet,**
**dass** die HF-Kommunikation in den unterschiedlichen Betriebsarten mit unterschiedlichem Leistungspegel und ein jeweiliges Umschalten von der Weitbereichs-Betriebsart in die Nahbereichs-Betriebsart und umgekehrt jeweils durch entsprechendes Umschalten des Leistungspegels erfolgt.

2. Zugangskontrolleinrichtung nach Anspruch 1,
**dadurch gekennzeichnet,**
**dass** die HF-Kommunikation in den unterschiedlichen Betriebsarten mit unterschiedlicher Datenmodulation erfolgt.

3. Zugangskontrolleinrichtung nach Anspruch 1 oder 2,
**dadurch gekennzeichnet,**
**dass** für die HF-Kommunikation jeweils eine Amplituden-, Frequenz- oder Phasenmodulation vorgesehen ist.

4. Zugangskontrolleinrichtung nach einem der vorhergehenden Ansprüche,
**dadurch gekennzeichnet,**
**dass** in der Weitbereichs-Betriebsart die maximale Entfernung der Identifikationseinrichtung (22) von der Steuereinrichtung (20), bei der die HF-Kommunikation noch möglich ist, in einem Bereich von etwa 30 bis etwa 40 m liegt.

5. Zugangskontrolleinrichtung nach einem der vorhergehenden Ansprüche,
**dadurch gekennzeichnet,**
**dass** in der Nahbereichs-Betriebsart die maximale Entfernung der Identifikationseinrichtung (22) von der Steuereinrichtung (20), bei der die HF-Kommunikation noch möglich ist, in einem Bereich von etwa 2 bis etwa 4 m liegt.

6. Zugangskontrolleinrichtung nach einem der vorhergehenden Ansprüche,
**dadurch gekennzeichnet,**
**dass** der Weitbereichs-Betriebsart zumindest eine Fernbedienungsfunktion zugeordnet ist.

7. Zugangskontrolleinrichtung nach Anspruch 6,
**dadurch gekennzeichnet,**
**dass** für die Fernbedienungsfunktion die HF-Kommunikation, insbesondere die der Identifikation dienende HF-Kommunikation, über die Identifikationseinrichtung (22) auslösbar ist.

8. Zugangskontrolleinrichtung nach Anspruch 7,
**dadurch gekennzeichnet,**
**dass** die HF-Kommunikation über wenigstens eine der Identifikationseinrichtung (22) zugeordnete Taste oder dergleichen auslösbar ist.

9. Zugangskontrolleinrichtung nach Anspruch 7 oder 8,
**dadurch gekennzeichnet,**
**dass** mit der über die Identifikationseinrichtung (22) erfolgenden Auslösung die Weitbereichs-Betriebsart aktivierbar ist.

10. Zugangskontrolleinrichtung nach einem der vorhergehenden Ansprüche,
**dadurch gekennzeichnet,**
**dass** der Nahbereichs-Betriebsart zumindest eine schlüssellose Funktion zugeordnet ist.

11. Zugangskontrolleinrichtung nach Anspruch 10,
**dadurch gekennzeichnet,**
**dass** für die schlüssellose Funktion die der Identifikation dienende Kommunikation über zugangsseitige Mittel, die durch den sich im Nahbereich befindenden Benutzer (32) betätigbar sind, und/oder über zugangsseitige Mittel auslösbar ist, über die die Anwesenheit des Benutzers (32) und/oder der Identifikationseinrichtung (22) im Nachbereich erfassbar ist, so dass eine Auslösung nur bei sich im Nachbereich befindendem Benutzer (32) bzw. Identifikationseinrichtung (22) möglich ist.

12. Zugangskontrolleinrichtung nach Anspruch 11,
**dadurch gekennzeichnet,**
**dass** im Fall eines Fahrzeuges eine entsprechende Auslösung der der Identifikation dienenden Kommunikation nur möglich ist, wenn der Benutzer (32) bzw. die Identifikationseinrichtung (22) nicht weiter als etwa 1 bis etwa 3 m vom Fahrzeugmittelpunkt entfernt ist.

13. Zugangskontrolleinrichtung nach Anspruch 11 oder 12,
**dadurch gekennzeichnet,**
**dass** die der Identifikation dienende Kommunikation über einen Türgriff, einen Schalter, einen Näherungssensor und/oder dergleichen auslösbar ist.

14. Zugangskontrolleinrichtung nach einem der Ansprüche 11 bis 13,
**dadurch gekennzeichnet,**
**dass** mit der über die betreffenden Mittel erfolgenden Auslösung der der Identifikation dienenden Kommunikation die Nahbereichs-Betriebsart aktivierbar ist.

15. Zugangskontrolleinrichtung nach einem der vorhergehenden Ansprüche,
**dadurch gekennzeichnet,**
**dass** in der Weitbereichs-Betriebsart zumindest zeitweise eine bidirektionale HF-Kommunikation zwischen der Steuereinrichtung und der Identifikationseinrichtung (22) erfolgt.

16. Zugangskontrolleinrichtung nach einem der vorhergehenden Ansprüche,
**dadurch gekennzeichnet,**
**dass** die Steuereinrichtung (20) und/oder die Identifikationseinrichtung (22) jeweils einen NF-Schaltkreis (24), einen HF-Schaltkreis (26) und eine vorzugsweise einen Mikroprozessor aufweisende Logikeinheit (28) umfasst.

17. Zugangskontrolleinrichtung nach einem der vorhergehenden Ansprüche,
**dadurch gekennzeichnet,**
**dass** zur Aktivierung der Nahbereichs-Betriebsart die Steuereinrichtung (20) und die Identifikationseinrichtung (22) jeweils mit einem Schaltsignal beaufschlagbar sind.

18. Zugangskontrolleinrichtung nach Anspruch 17,
**dadurch gekennzeichnet,**
**dass** das für die Steuereinrichtung (20) bestimmte, der Aktivierung der Nahbereichs-Betriebsart dienende Schaltsignal mit der Auslösung der der Identifikation dienenden Kommunikation erzeugt wird.

19. Zugangskontrolleinrichtung nach Anspruch 17 oder 18,
**dadurch gekennzeichnet,**
**dass** das für die Steuereinrichtung (20) bestimmte, der Aktivierung der Nahbereichs-Betriebsart dienende Schaltsignal über einen Türgriff, einen Schalter, einen Näherungssensor und/oder dergleichen erzeugt wird.

20. Zugangskontrolleinrichtung nach einem der vorhergehenden Ansprüche,
**dadurch gekennzeichnet,**
**dass** das für die Identifikationseinrichtung (22) bestimmte, der Aktivierung der Nahbereichs-Betriebsart dienende Schaltsignal über eine der Identifikationseinrichtung (22) zugeordnete NF-Empfangseinheit erzeugt wird, durch die die Logikeinheit (28) bzw. der Mikroprozessor und der HF-Schaltkreis (26) der Identifikationseinrichtung (22) für die schlüssellose Kommunikation aktiviert werden.

21. Zugangskontrolleinrichtung nach einem der vorhergehenden Ansprüche,
**dadurch gekennzeichnet,**
**dass** in der Weitbereichs-Betriebsart zumindest zeitweise eine unidirektionale HF-Kommunikation von der Identifikationseinrichtung (22) zur Steuereinrichtung (20) erfolgt.

22. Zugangskontrolleinrichtung nach einem der vorhergehenden Ansprüche,
**dadurch gekennzeichnet,**
**dass** bei einem jeweiligen Umschalten von der Weitbereichs-Betriebsart in die Nahbereichs-Betriebsart durch entsprechendes Umschalten des Leistungspegels die der Steuereinrichtung zugeordnete HF-Empfangseinheit ihren Weitbereichs-Betriebsmodus beibehält.

23. Zugangskontrolleinrichtung nach einem der vorhergehenden Ansprüche,
**dadurch gekennzeichnet,**
**dass** für ein Umschalten zwischen den verschiedenen Betriebsarten durch entsprechendes Umschalten zwischen verschiedenen Datenmodulationsarten das für die Identifikationseinrichtung (22) bestimmte, der Aktivierung der Nahbereichs-Betriebsart dienende Schaltsignal über eine der Identifikationseinrichtung (22) zugeordnete NF-Empfangseinheit erzeugt wird, durch die die Logikeinheit (28) bzw. der Mikroprozessor und der HF-Schaltkreis (26) der Identifikationseinrichtung (22) für die schlüssellose Kommunikation aktiviert werden.

## Claims

1. An access control device (16), in particular for vehicles (18), comprising a control device (20) on the access side, a portable identification device (22) on the user side and transmitter units, receiver units and/or transceiver units associated with the control device (20) and the identification device (22) for a wireless LF and RF communication between the control device (20) and the identification device (22), wherein different operating modes for the RF communication can be activated in dependence on the type of the triggering of the respective communication serving for the identification between the control device (20) and the identification device (22) of which one represents a far range operating mode in which the RF communication is still possible even with an identification device (22) relatively far away from the control device (20) and another represents a near range operating mode in which the RF communication is only possible with an identification device (22) relatively close to the control device (20), wherein at least partly different functions are associated with the far range operating mode and with the near range operating mode,
**characterized in that**
the RF communication takes place at different power levels in the different operating modes and a respective switching from the far range operating mode into the near range operating mode, and vice versa, in each case takes place by a corresponding switching of the power level.

2. An access control device in accordance with claim 1, **characterized in that** the RF communication takes place with different data modulation in the different operating modes.

3. An access control device in accordance with claim 1 or claim 2, **characterized in that** amplitude modulation, frequency modulation or phase modulation is respectively provided for the RF communication.

4. An access control device in accordance with any one of the preceding claims, **characterized in that** the maximum distance of the identification device (22) from the control device (20) at which the RF communication is still possible in the far range operating mode lies in a range from approximately 30 to approximately 40 m.

5. An access control device in accordance with any one of the preceding claims, **characterized in that** the maximum distance of the identification device (22) from the control device (20) at which the RF communication is still possible in the near range operating mode lies in a range from approximately 2 to approximately 4 m.

6. An access control device in accordance with any one of the preceding claims, **characterized in that** at least one remote control function is associated with the far range operating mode.

7. An access control device in accordance with claim 6, **characterized in that** the RF communication, in particular the RF communication serving for the identification, can be triggered via the identification device (22) for the remote control function.

8. An access control device in accordance with claim 7, **characterized in that** the RF communication can be triggered via at least one button or the like associated with the identification device (22).

9. An access control device in accordance with claim 7 or claim 8, **characterized in that** the far range operating mode can be activated by the triggering which takes place via the identification device (22).

10. An access control device in accordance with any one of the preceding claims, **characterized in that** at least one keyless function is associated with the near range operating mode.

11. An access control device in accordance with claim 10, **characterized in that** the communication serving for the identification is triggerable for the keyless function via means on the access side which are actuable by the user (32) in the near region and/or via means on the access side via which the presence of the user (32) and/or of the identification device (22) is detectable in the near region so that a triggering is only possible when the user (32) or the identification device (22) is in the near region.

12. An access control device in accordance with claim 11, **characterized in that** a corresponding triggering of the communication serving for the identification is only possible in the case of a vehicle when the user (32) or the identification device (22) is no further away from the vehicle center than approximately 1 to approximately 3 m.

13. An access control device in accordance with claim 11 or claim 12, **characterized in that** the communication serving for the identification is triggerable via a door handle, a switch, a proximity sensor and/or the like.

14. An access control device in accordance with one of claims 11 to 13, **characterized in that** the near range operating mode can be activated by the triggering of the communication serving for the identification which takes place via the relevant means.

15. An access control device in accordance with any one of the preceding claims, **characterized in that** a bidirectional RF communication between the control device and the identification device (22) takes place at least at times in the far range operating mode.

16. An access control device in accordance with any one of the preceding claims, **characterized in that** the control device (20) and/or the identification device (22) each include an LF circuit (24), an RF circuit (26) and a logic unit (28) preferably having a microprocessor.

17. An access control device in accordance with any one of the preceding claims, **characterized in that** the control device (20) and the identification device (22) can each be acted on by a switching signal to activate the near range operating mode.

18. An access control device in accordance with claim 17, **characterized in that** the switching signal intended for the control device (20) and serving for the activation of the near range operating mode is produced by the triggering of the communication serving for the identification.

19. An access control device in accordance with claim 17 or claim 18, **characterized in that** the switching signal intended for the control device (20) and serving for the activation of the near range operating mode is produced via a door handle, a switch, a proximity sensor and/or the like.

20. An access control device in accordance with any one of the preceding claims, **characterized in that** the switching signal intended for the identification device (22) and serving for the activation of the near range operating mode is produced via an LF receiver unit which is associated with the identification device (22) and by which the logic unit (28) or the microprocessor and the RF circuit (26) of the identification device (22) are activated for the keyless communication.

21. An access control device in accordance with any one of the preceding claims, **characterized in that** a unidirectional RF communication takes place at least at times from the identification device (22) to the control device (20) in the far range operating mode.

22. An access control device in accordance with any one of the preceding claims, **characterized in that**, on a respective switching from the far range operating mode into the near range operating mode by a corresponding switching of the power level, the RF receiver unit associated with the control device maintains its far range operating mode.

23. An access control device in accordance with any one of the preceding claims, **characterized in that**, for a switching between the different operating modes by a corresponding switching between different data modulation types, the switching signal intended for the identification device (22) and serving for the activation of the near range operating mode is produced via an LF receiver unit which is associated with the identification device (22) and by which the logic unit (28) or the microprocessor and the RF circuit (26) of the identification device (22) are activated for the keyless communication.

## Revendications

1. Dispositif de contrôle d'accès (16), en particulier pour des véhicules (18), avec un dispositif de commande (20) côté accès, un dispositif d'identification (22) portable côté utilisateur, et des unités émettrices, réceptrices et/ou émettrices-réceptrices, associées au dispositif de commande (20) ainsi qu'au dispositif d'identification (22), pour une communication BF et HF sans fil entre le dispositif de commande (20) et le dispositif d'identification (22), sachant que, en fonction du type de déclenchement d'une communication respective servant à l'identification, entre le dispositif de commande (20) et le dispositif d'identification (22) pour la communication HF, différents types de fonctionnement sont activables, dont un constitue un type de fonctionnement à grande portée, dans lequel la communication HF est possible également encore lorsque le dispositif d'identification (22) est placé relativement loin du dispositif de commande (20), et un autre constitue un type de fonctionnement à courte portée, dans lequel la communication HF n'est possible que lorsque le dispositif d'identification (22) se trouve relativement près du dispositif de commande (20), sachant que des fonctions, au moins partiellement différentes, sont associées au type de fonctionnement à grande portée et au type de fonctionnement à courte portée,
**caractérisé en ce que**
la communication HF dans les différents types de fonctionnement s'effectue avec un niveau de puissance différent et une commutation respective du type de fonctionnement à grande portée au type de fonctionnement à courte portée, et inversement, s'effectue chaque fois par une commutation correspondante du niveau de puissance.

2. Dispositif de contrôle d'accès selon la revendication 1,
**caractérisé en ce que**
la communication HF effectuée dans les types de fonctionnement différents est réalisée avec une modulation de données différente.

3. Dispositif de contrôle d'accès selon la revendication 1 ou 2,
**caractérisé en ce que**
une modulation d'amplitude, de fréquence, ou de phase, est prévue pour chaque communication HF.

4. Dispositif de contrôle d'accès selon l'une des revendications précédentes,
**caractérisé en ce que**,
dans le type de fonctionnement à grande portée, l'éloignement maximal entre le dispositif d'identification (22) et le dispositif de commande (20), pour lequel la communication HF est encore possible, est dans une fourchette allant d'environ 30 à environ 40 m.

5. Dispositif de contrôle d'accès selon l'une des revendications précédentes,
**caractérisé en ce que**,
dans le type de fonctionnement à courte portée, l'éloignement maximal entre le dispositif d'identification (22) et le dispositif de commande (20), pour lequel la communication HF est encore possible, est situé dans une fourchette allant d'environ 2 à environ 4 m.

6. Dispositif de contrôle d'accès selon l'une des revendications précédentes,
**caractérisé en ce qu'**au type de fonctionnement à grande portée est associée au moins une fonction de télécommande.

7. Dispositif de contrôle d'accès selon la revendication 6,
**caractérisé en ce que**,
pour la fonction de télécommande, la communication HF, en particulier la communication HF servant à l'identification, peut être déclenchée par l'intermédiaire du dispositif d'identification (22).

8. Dispositif de contrôle d'accès selon la revendication 7,
**caractérisé en ce que**
la communication HF peut être déclenchée par au moins une touche ou analogue, associée au dispositif d'identification (22).

9. Dispositif de contrôle d'accès selon la revendication 7 ou 8,
**caractérisé en ce que**
le type de fonctionnement à grande portée est activable avec le déclenchement se faisant avec le dispositif d'identification (22).

10. Dispositif de contrôle d'accès selon l'une des revendications précédentes,
**caractérisé en ce qu'**au moins une fonction sans clé est associée au type de fonctionnement à courte portée.

11. Dispositif de contrôle d'accès selon la revendication 10,
**caractérisé en ce que**,
pour la fonction sans clé, la communication servant à l'identification est détectable par des moyens situés côté accès, actionnables par l'utilisateur (32) se trouvant dans la zone proche et/ou est déclenchable par des moyens situés côté accès, par lesquels la présence de l'utilisateur (32) et/ou du dispositif d'identification (22) dans la zone proche est détectable, de manière qu'un déclenchement ne soit possible que lorsque l'utilisateur (32) ou le dispositif d'identification (22) se trouve dans la zone proche.

12. Dispositif de contrôle d'accès selon la revendication 11,
**caractérisé en ce que**,
dans le cas d'un véhicule, un déclenchement correspondant de la communication servant à l'identification n'est possible que lorsque l'utilisateur (32), ou le dispositif d'identification (22), n'est pas éloigné de plus d'environ 1 à environ 3 m du centre du véhicule.

13. Dispositif de contrôle d'accès selon la revendication 11 ou 12,
**caractérisé en ce que**
la communication servant à l'identification peut être déclenchée par une poignée de portière, un interrupteur, un capteur de proximité et/ou analogue.

14. Dispositif de contrôle d'accès selon l'une des revendications 11 à 13,
**caractérisé en ce que**
le type de fonctionnement à courte portée est activable avec le déclenchement, se faisant par les moyens concernés, de la communication servant à l'identification.

15. Dispositif de contrôle d'accès selon l'une des revendications précédentes,
**caractérisé en ce que**,
dans le type de communication à grande portée, au moins par moments, est effectuée une communication HF bidirectionnelle entre le dispositif de commande et le dispositif d'identification (22).

16. Dispositif de contrôle d'accès selon l'une des revendications précédentes,
**caractérisé en ce que**
le dispositif de commande (20) et/ou le dispositif d'identification (22) comprend/comprennent respectivement un circuit BF (24), un circuit HF (26) et une unité logique (28), comprenant de préférence un microprocesseur (17).

17. Dispositif de contrôle d'accès selon l'une des revendications précédentes,
**caractérisé en ce que**,
pour l'activation du type de fonctionnement à courte portée, le dispositif de commande (20) et le dispositif d'identification (22) sont susceptibles d'être sollicités respectivement par un signal de commutation.

18. Dispositif de contrôle d'accès selon la revendication 17,
**caractérisé en ce que**
le signal de commutation, servant à l'activation du type de fonctionnement à courte portée et déterminé pour le dispositif de commande (20), est produit avec le déclenchement de la communication servant à l'identification.

19. Dispositif de contrôle d'accès selon la revendication 17 ou 18,
**caractérisé en ce que**
le signal de commutation, servant à l'activation du type de fonctionnement à courte portée et déterminé pour le dispositif de commande (20), est produit par une poignée de portière, un interrupteur, un capteur de proximité et/ou analogue.

20. Dispositif de contrôle d'accès selon l'une des revendications précédentes,
**caractérisé en ce que**
le signal de commutation, servant à l'activation du type de fonctionnement à courte portée et déterminé pour le dispositif d'identification (22), est produit par une unité de réception BF associée au dispositif d'identification (22), unité de réception au moyen de laquelle l'unité logique (28) ou le microprocesseur et le circuit HF (26) du dispositif d'identification (22) pour la communication sans clé sont activés.

21. Dispositif de contrôle d'accès selon l'une des revendications précédentes,
**caractérisé en ce que**,
dans le type de fonctionnement à grande portée, au moins par moments, est effectuée une communication HF unidirectionnelle, du dispositif d'identification (22) au dispositif de commande (20).

22. Dispositif de contrôle d'accès selon l'une des revendications précédentes,
**caractérisé en ce que**
dans le cas d'une commutation respective, du type de fonctionnement à grande portée au type de fonctionnement à courte portée, l'unité de réception HF, associée au dispositif de commande, conserve son mode de fonctionnement à grande portée, au moyen d'une commutation correspondante du niveau de puissance.

23. Dispositif de contrôle d'accès selon l'une des revendications précédentes,
**caractérisé en ce que**,
pour une commutation entre les différents types de fonctionnement, au moyen d'une commutation correspondante entre différents types de modulation de données, le signal de commutation, servant à l'activation du type de fonctionnement à courte portée et déterminé pour le dispositif d'identification (22), est produit par une unité de réception BF associée au dispositif d'identification (22), unité de réception BF au moyen de laquelle l'unité logique (28) ou le microprocesseur et le circuit HF (26) du dispositif d'identification (22) pour la communication sans clé sont activés.
